Europäisches Patentamt

European Patent Office

Office européen des brevets

(11) Veröffentlichungsnummer: **0 003 607**
**B1**

(12) **EUROPÄISCHE PATENTSCHRIFT**

(45) Veröffentlichungstag der Patentschrift: **11.11.81**

(51) Int. Cl.³: **B 01 D 23/24**

(21) Anmeldenummer: **79100402.1**

(22) Anmeldetag: **12.02.79**

(54) Regenierung einer Materialsäule aus körnigem Behandlungsmaterial.

(30) Priorität: **13.02.78 HU DE000952**

(43) Veröffentlichungstag der Anmeldung:
**22.08.79 Patentblatt 79/17**

(45) Bekanntmachung des Hinweises auf die Patenterteilung:
**11.11.81 Patentblatt 81/45**

(84) Benannte Vertragsstaaten:
**BE CH DE FR GB IT LU NL SE**

(56) Entgegenhaltungen:
**DE - A - 1 926 934**
**DE - A - 2 017 131**
**DE - A - 2 126 631**
**FR - A - 1 334 412**
**FR - A - 2 029 112**

(73) Patentinhaber: **NIKEX Nehézipari Külkereskedelmi Vállalat**
**Mészáros u. 48**
**H-1368 Budapest I (HU)**

(72) Erfinder: **Demeter, Lászlo**
**Bocskai u.9**
**H-1368 Budapest XI (HU)**
Erfinder: **Demeter, Akos**
**Bocskai u.9**
**H-1368 Budapest XI (HU)**

(74) Vertreter: **Viering, Hans-Martin, Dipl.-Ing. et al,**
**Patentanwälte Viering & Jentschura**
**Steinsdorfstrasse 6**
**D-8000 München 22 (DE)**

**0 003 607**

Regenerierung einer Materialsäule aus körnigem Behandlungsmaterial

In den letzten Jahrzehnten wurde das Filtern von Flüssigkeiten auf verschiedenen Gebieten der Industrie eine sich immer häufiger ergebende Aufgabe. Dieses Problem hat im Zusammenhang mit dem rapid ansteigenden Wasserverbrauch und dem damit verbundenen zunehmenden Wassermangel eine immer mehr ausschlaggebende Wichtigkeit erhalten. Im Zusammenhang damit sind die im Gebiet des Flüssigkeitsfilterns einen großen Fortschritt bedeutenden Turmfilter entstanden, bei denen das Filtern mit einer vertikalen Filtersäule aus körnigem Material bei horizontaler Flüssigkeitsströmung durchgeführt wird. Dadurch sind gegenüber dem zuvor angewandten Filterverfahren mit horizontalem Filterbett und der hierzu verwendeten Einrichtung eine wirtschaftlichere Reinigung des Rohwassers und außerdem eine Verringerung der Investitions- und Betriebskosten sowie eine vorteilhafte Platzausnutzung ermöglicht.

Ein solches Verfahren bzw. eine solche Einrichtung ist in der ungarischen Patentschrift 154 412 beschrieben.

Eine Weiterentwicklung des Turmfilters ist in der ungarischen Patentschrift 163 094 beschrieben, die im Vergleich zu den durch frühere Turmfilter gesicherten Merkmalen hauptsächlich eine Verbesserung der Filtrierqualität betrifft.

Ähnliche Turmfilter sind aus der DE—OS 1 926 934 und der DE—OS 2 126 631 bekannt.

Im Laufe des Betriebs von Turmfiltern haben sich durch die dabei gesammelten Erfahrungen gewisse Schwierigkeiten und Nachteile herausgestellt, durch welche die Richtung der erforderlichen Weiterentwicklung bestimmt werden konnte.

Es konnte festgestellt werden, daß die aufgetretenen Schwierigkeiten in erster Linie dadurch entstehen, daß bei der Regenerierung der verschmutzten Filtersäule bei sämtlichen bekannten Typen von Turmfiltern durch eine nach längerer oder kürzerer Betriebsdauer erfolgende Rezirkulation oder durch ein Rückwaschen mit Hilfe einer entsprechenden, außen am Turmfilter oder in dessen Innerem angeordneten Rohrleitung (z.B. mittels eines Druckmittelstromes, der mit Hilfe eines starken Kompressors, eines Injektors oder einer starken Pumpe eingeführt wird), die verschmutzten Filterkörner aus dem im Filterturm unten angeordneten kegelförmigen Sammelraum in den oberen Sammelraum der Filtersäule und weiter von hier aus nach dem Waschen und Absetzen in den oberen Teil der Filtersäule zurückgetragen oder zurückgespült werden. Dieses herkömmliche Verfahren zur Regenerierung der Filtersäule ist aus mehreren Gesichtspunkten heraus nachteilig. Es bleiben nämlich im Verlauf der Rückspülung Toträume zurück, die die Qualität des Filterns infolge der Sandstagnation herabsetzen. Ferner entstehen durch das gesonderte Rezirkulations-Rohrleitungssystem und deren Einrichtung sowohl hinsichtlich Investition als auch Instandhaltung bedeutende Mehrkosten. Außerdem werden durch die gegenwärtige Rezirkulationslösung infolge einer Verstopfung der engen Querschnitte der Leitungen mit Sand ein beträchtlicher Ausfall an Betriebszeit und ein beträchtlicher Leistungsabfall verursacht. Weiter bedeutet das mit der Regenerierung einhergehende Herausheben der Filterkörner aus dem kegelförmigen Sammelbehälter, daß im Turmfilter über eine wesentliche Höhe hin inaktives Filtervolumen vorhanden ist. Der kegelförmige Boden ist besonders bei Filtereinheiten größerer Leistung nachteilig, weil sich dadurch das Verhältnis des nutzbaren Volumens weiter verringert, die Kosten der Werkzeugbestückung ebenfalls anwachsen und aus statischen Gründen auch der spezifische Materialaufwand zunimmt.

Weiter bereitet bei den wohlbekannten Turmfiltern bei zeitweise auftretender Verstopfung die Reinigung der die Wand des Sammelraumes für das filtrierte Wasser bildenden Filteroberfläche große Schwierigkeiten, da infolge des großen Querschnittes dieses Sammelraumes und daher der großen Oberfläche die Geschwindigkeit des zur Rückspülung verwendeten Strömungsmittels sehr klein ist und daher die Rückspülung nicht mit hinreichend gutem Erfolg und nicht in entsprechender Qualität durchgeführt werden kann.

Schließlich verursacht die Entsandung des bei verschiedenen Turmfiltertypen unterschiedlich ausgebildeten Rohwasserverteilerraumes große Schwierigkeiten, in den verunreinigter Sand hauptsächlich bei der Regenerierung der Filtersäule gelangt.

Zweck der Erfindung ist zum Behandeln von Flüssigkeiten, insbesondere Wasser, die Schaffung eines Verfahrens und einer Einrichtung, durch welche der Behandlungswirkungsgrad wesentlich dadurch verbessert wird, daß eine wirksamere, schnellere und intensivere Regenerierung und gegebenenfalls Reinigung des Behandlungsmaterials erreicht wird und durch welche außerdem die Wirtschaftlichkeit des Behandlungsvorganges durch geringeren Platzbedarf und kleineren Rohstoffaufwand erhöht wird.

Wenngleich die Erfindung hauptsächlich auf das Filtrieren von Flüssigkeiten, insbesondere von Wasser, in einer horizontal durchströmten Sandsäule gerichtet ist, läßt sie sich entsprechend mit Vorteil auch anwenden auf andere Behandlungsverfahren und -einrichtungen von Flüssigkeiten, insbesondere von Wasser, in einer horizontal durchströmten Materialsäule aus körnigem Behandlungsmaterial insbesondere zum Ionenaustausch in einem Ionenaustauscher.

Die Grundlage der Erfindung liegt in der Erkenntnis, daß der oben erwähnte Zweck leicht erreicht werden kann, d.i. die bei dam Betrieb von Turmfiltern und Turmionentauschern und hauptsächlich sich während der Regenerierung zeigenden, mit den Kosten der Einrichtung, mit der Qualität der Flüssigkeitsbehandlung und mit dem Zeitbedarf für die Regenerierung im Zusammenhang stehenden Nachteile vollkommen behoben werden können, wenn bereits das Behandlungsverfahren für die Flüssigkeit in bestimmter Weise geführt wird und die hierzu verwendeten Einrichtungen gleichzeitig für eine bestimmte Führung des Regenerierungsverfahrens gestaltet und beim Regenerierungsverfahren ausgenutzt werden.

Bei dem Behandlungsverfahren wird die Flüssigkeit aus einem vertikalen, im wesentlichen die gesamte horizontale Breite der Materialsäule einnehmenden Eintrittspalt an der einen Seite derselben in die Materialsäule verteilt und an der anderen Seite derselben mittels eines vertikalen perforierten Sammelrohres wesentlich geringeren Querschnitts als der Eintrittsspalt aus der Materialsäule abgeführt. Durch diesen geringen Querschnitt des perforierten Sammelrohres ist es möglich geworden, nach dem Abschalten des Behandlungsvorganges eine Regenerierflüssigkeit mit hoher Geschwindigkeit von oben nach unten durch das perforierte Sammelrohr einzuleiten, so daß dadurch ein wirksames Rückwaschen des perforierten Sammelrohres und des Materials in der Umgebung des Sammelrohres erfolgt.

Die bei konventionellen Turmfiltern gemachten Erfahrungen im Betrieb haben nämlich erwiesen, daß sogar vielfach überdimensionierte Reinwasser-Sammeloberflächen nicht fähig sind, die früher oder später ohnedies auftretenden Verstopfungen der Filteroberfläche zu verhindern. Verstopfungen solcher Art verursachen z.B. die im Filtersand immer vorhandenen kleinen Körner, die sich in den Filterspalten einklemmen, die beim vorübergehenden Ausfall der Dosierung von Chemikalien durch die Sandschicht gelangenden Verschmutzungen kollodialer Größe, die sich an den Filteroberflächen ablagern, oder der sich beim Tiefwasserfiltrieren infolge Druckabfalls auf den Filteroberflächen niederschlagende Wasserstein. Die auf diese Weise verstopften großen Oberflächen können durch Rückspülen wirksam nicht gereinigt werden, denn hierzu ist die Strömungsgeschwindigkeit des Spülwassers zu klein. Die Lösung gemäß der Erfindung geht aus einer der bisher geübten Praxis grundsätzlich entgegengesetzten Erwägung hervor, nämlich daraus, daß zum Sammeln der behandelten Flüssigkeit eine nur so kleine Oberfläche verwendet wird, die die behandelte Flüssigkeit in entsprechender Menge nur gerade noch gut durchläßt. Eine derart verhältnismäßig kleine Oberfläche kann bereits wirksam zurückgespült werden, da die Rückspülflüssigkeit aus den Perforationen des Sammelrohres mit hinreichend hoher Geschwindigkeit herausströmt, um die eingeklemmten Materialkörner und angeklebten Verschmutzungen loswaschen zu können. Hierzu muß aber gesichert werden, daß die Rückspülflüssigkeit am unteren und oberen Ende der Oberfläche des Sammelrohres gleichermaßen mit entsprechender Geschwindigkeit herausströmt.

Ferner wird es durch die Erfindung ermöglicht, daß die Regenerierung der verschmutzten bzw. erschöpften Materialsäule ohne besondere zusätzliche Einrichtung (z.B. eine übermäßig starke Pumpe, einen Kompressor oder eine Wasserstrahlpumpe) ausschließlich durch in entsprechender Richtung mit entsprechender Intensität erfolgende Flüssigkeitsstrahlinjizierung so geschieht, daß die Materialsäule unten verschlammt wird und durch die gegebenen Druckverhältnisse der Flüssigkeitsstrahl in eine reversierte Strömung bzw. zu einer Rezirkulation gebracht wird und die Materialkörner der Materialsäule dadurch rückgewaschen werden, wodurch die Materialkörner gereinigt und gegebenenfalls regeneriert werden. Da die Verschlammung des unteren Teiles der Materialsäule durch die Einstellung der Stärke des injizierten Flüssigkeitsstrahles auf eine beliebige kleinere oder größere Fläche ausgeweitet werden kann, kann in der Materialsäule das Verhältnis zwischen Rezirkulation und Rückwaschen in beliebigem Maße geändert werden. Einen wesentlichen Teil der Erfindung bildet außerdem die mit Hilfe eines Flüssigkeitsstrahls durchzuführende Entsandung des die Rohflüssigkeit zuführenden Eintrittsspaltes. Dies Vorgänge können auch bei vorhandenen bekannten Sandfiltertypen selbständig durch geführt werden, bzw. diese können hierzu auch nachträglich umgebaut oder abgewandelt werden.

Ferner ist die Erfindung auf eine Vorrichtung zur Durchführung des Regenerierverfahrens gerichtet. Die Einrichtung gemäß der Erfindung weist in Richtung des Flüssigkeitsstromes vor der Materialsäule einen mit Hilfe einer jalousieartigen Wand aus in Abstand voneinander prallel zueinander verlaufenden Plattenstreifen, von denen vertikal benachbarte Plattenstreifen mit ihren benachbarten Rändern in gleicher Höhe liegen oder gegebenenfalls einander etwas in vertikaler Richtung überlappen, einen zweckentsprechend schmalen Eintrittsspalt auf, der unten mit der Materialsäule über eine große Öffnung verbunden ist. Dieser Eintrittsspalt dient einerseits zur Verteilung der zu behandelnden Flüssigkeit in die Materialsäule und bildet andererseits den Weg für die Rezirkulation von Materialkörnern bei der Regenerierung der Materialsäule. Des weiteren ist in der Einrichtung unter dem Eintrittsspalt mit Hilfe einer Leitplatte ein unterer Raum ausgebildet, damit nach der Reinigung und Regenerierung der Materialsäule zwecks Entsandung des Eintrittsspaltes ein oder mehrere Flüssigkeitsstrahlen eingeführt werden können, die an der Leitplatte durch Anprallen zerteilt und in Wirbelbewegung versetzt werden und — durch den Eintrittsspalt nach oben strömend — die während der Regenerierung in dem Eintrittsspalt eingetretenen Materialkörner mitreißen und auf das obere Ende der Materialsäule fördern und den Eintrittsspalt hierdurch von Materialkörnern säubern. Ferner befindet sich in Richtung der Strömung der zu behandelnden Flüssigkeit durch die Materialsäule hinter derselben ein die Materialkörner nicht durchlassendes, die behandelte Flüssigkeit jedoch durchlassendes, vertikal angeordnetes perfo-

3

riertes Sammelrohr, das zum Herausführen der behandelten Reinflüssigkeit aus dem Behandlungsbehälter dient. Vorzugsweise befindet sich am oberen Ende des Sammelrohres eine geschwindigkeitserhöhende Verengung, an die der Zulauf der Regenerierflüssigkeit, für das Filtern von Wasser vorzugsweise in Form eines Rückführungsrohres des Reinwassers, angeschlossen ist.

Versuche beim Filtrieren von Wasser haben nämlich erwiesen, daß es zum Sammeln des filtrierten Wassers zweckmäßig ist, ein einziges vertikales Sammelrohr anzuwenden, in welches das Spülwasser von oben nach unten gerichtet durch eine geschwindigkeitserhöhende Verengung mit 5 bis 15 m/s Geschwindigkeit eingeführt wird.

Versuche haben erwiesen, daß in solchen Fällen das Spülwasser am oberen Teil des Sammelrohres nich entweicht, da der injizierte Wasserstrahl bis zur sohle des Sammelrohres hin vordringt und dort so angestaut wird, daß ein auf der ganzen Oberfläche des Sammelrohres praktisch gleichmäßiges Herausströmen des Spülwassers gewährleistet ist.

Entsprechend den obigen Ausführungsformen wird mit der Regenerierung am Ende jeder Behandlungsperiode zweckmäßig so begonnen, daß in das die Reinflüssigkeit abführende Sammelrohr von oben nach unten für einige Sekunden hindurch ein Regenerierflüssigkeitsstrom, beim Filtern gefiltertes Wasser, mit der oben erwähnten Geschwindigkeit von 5 bis 15 m/s eingeleitet wird. Da gemäß den obigen Ausführungen zweckmäßig nur ein Sammelrohr verwendet wird, spült die Spülflüssigkeit über dessen verhältnismäßig kleine Oberfläche mit großer Geschwindigkeit hin und in die Materialsäule hinaus und reinigt nicht nur die Wand des Sammelrohres und seine Perforationen, sondern wäscht auch die dünne Materialschicht zwischen Sammelrohr und Wand des Behandlungsbehälters in ganzer Länge vollständig aus. Hierdurch wird das Verstopfen einer Materialschicht zwischen dem Sammelrohr und der Wand des Behandlungsbehälters auch bei verhältnismäßig kleinem Abstand zwischen denselben unmöglich gemacht.

Anschließend wird die Regenerierung der Materialsäule durchgeführt. Dies geschieht so, daß die Materialsäule mit Hilfe von Flüssigkeitsstrahlen aus Regenerierflüssigkeit unterwaschen wird, während der entgegenströmende Schlamm in dem mit der Materialsäule unten in Verbindung stehenden Eintrittsspalt nach oben gespült und auf das obere Ende der Materialsäule gebracht wird, wo er sich absetzen kann und von wo die Schmutzflüssigkeit durch einen Überlauf abfließen kann.

Sobald die Materialsäule bereits entsprechend regeneriert und gereinigt ist, werden die Regenerierflüssigkeitsstrahlen abgestellt und es wird Regenerierflüssigkeit auf solche Weise in den unteren Teil des Eintrittsspaltes eingeleitet, daß die zweckmäßig verteilten Flüssigkeitsstrahlen nur mehr die im Eintrittsspalt befindlichen Materialkörner verschlammen und auf das obere Ende der Materialsäule spülen, diese selbst jedoch nicht mehr unterspülen.

Bei dem Regenerierverfahren gemäß der Erfindung werden die Geschwindigkeit der in die Materialsäule in horizontaler Richtung injizierten Rohflüssigkeit und die Korngröße des Behandlungsmaterials zweckmäßig so ausgewählt, daß die herausgefilterten Verschmutzungsteilchen etwa bis zur Vertikalmitte der Materialsäule in diese eindringen und daß die andere Hälfte der Materialsäule zur Sicherstellung der Qualität der behandelten Flüssigkeit als zusätzliche Sicherungsschicht dient.

Bei einer vorteilhaften Ausführungsform der gemäß Erfindung gestalteten Vorrichtung wird daher die Materialsäule duch ein großlöcheriges perforiertes Blech horizontal unterteilt und auf diese Weise können die zu beiden Seiten des perforierten Bleches angeordneten vorderen und hinteren Materialschichten auch jeweils gesondert — die hintere Schicht seltener — durch Verschlammung, Rezirkulation und Rückwaschen regeneriert werden, da sich die Materialkörner der beiden Materialschichten auch dann nicht gegenseitig vermischen, wenn die Perforationslöcher viel größer sind als die Materialkörner selbst.

Da während der Behandlung und der damit einhergehenden Filtration praktisch nur die vordere Schicht der mit dem perforierten Blech zweigeteilten Materialsäule verstopft und erschöpft, braucht bei der jeweiligen Regenerierung nur diese vordere Schicht regeneriert zu werden, während die hintere Schicht, die sich weniger erschöpft und kaum verschmutzt, nur seltener zu regenerieren und zu reinigen ist. Durch die Unterteilung der Materialsäule mittels des perforierten Bleches kann daher praktisch die Zeitdauer der Regenerierung auf das für ihre Hälfte erforderliche Maß reduziert werden.

Bei einer anderen vorteilhaften Ausführungsform der Erfindung werden im Behandlungsbehälter symmetrisch zu einem gemeinsamen Eintrittsspalt beidseitig desselben zwei Materialsäulen angeordnet, wobei die beiden Materialsäulen jeweils gesonderte Sammelrohre aufweisen.

Die Erfindung wird mit Hilfe von zwei Ausführungsformen am Beispiel eines Turmfilters erläutert. Diese Ausführungsformen sind aus der Zeichnung wenigstens schematisch ersichtlich. In der Zeichnung zeigt:

Fig. 1 im Vertikalschnitt den konstruktiven Aufbau und die Funktion eines einfachen, rechteckigen Turmfilters,

Fig. 2 den Turmfilter aus Fig. 1 im Horizontalschnitt,

Fig. 3 eine zweite Ausführungsform des Turmfilters, bei welcher beidseitig eines gemeinsamen Eintrittsspaltes je eine Filtersäule aus körnigem Filtermaterial angeordnet sind und

Fig. 4 den Horizontalschnitt des Turmfilters aus Fig. 3.

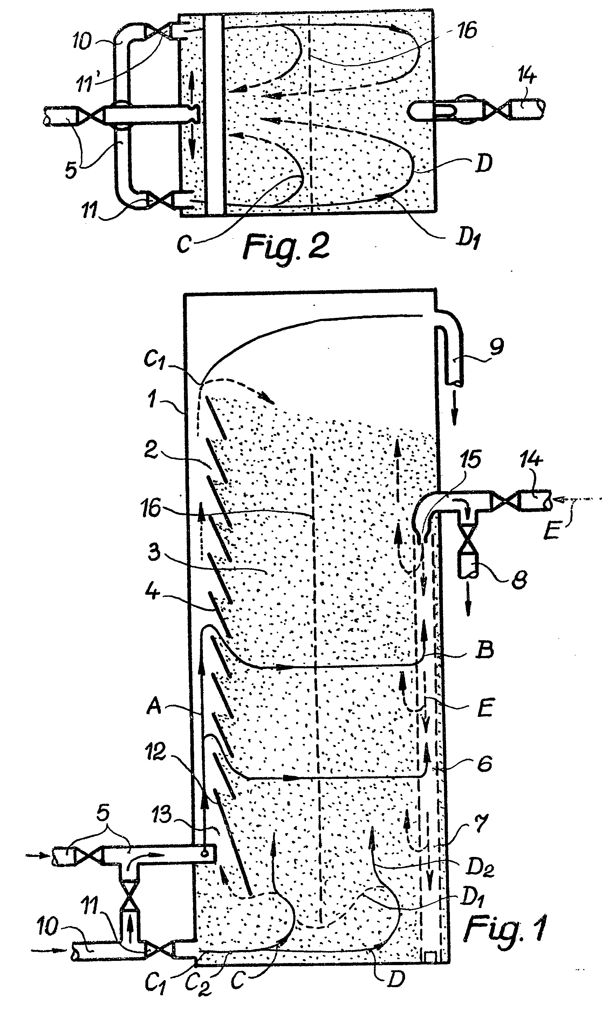

Bei der Ausführungsform der Erfindung gemäß den Fig. 1 und 2 ist zwischen der vorderen Vertikalwand 1 des rechteckigen Filterbehälters und der in dessen Innerem angeordneten Sandsäule 3 der

4

sich über die gesamte Horizontalbreite derselben erstreckende Eintrittsspalt 2 ausgebildet, der zu der Sandsäule 3 hin durch eine jalousieartige Wand begrenzt ist, welche aus vertikal übereinander angeordneten, parallel im Abstand voneinander zur Sandsäule 3 hin nach unten geneigten Plattenstreifen 4 gebildet ist, die — wenn in horizontaler Richtung gesehen wird — mit ihren einander benachbarten Rändern in derselben Höhe verlaufen oder sich gegebenenfalls mit ihren benachbarten Rändern etwas vertikal überlappen. In den Eintrittsspalt 2 wird das zu filtrierende Wasser durch das Zuleitungsrohr 5 am unteren Ende des Eintrittsspaltes 2 in dessen Quermitte eingeführt, so daß es in diesem nach oben strömen kann. Die Sandsäule 3 ist an der anderen, der Vertikalwand 1 gegenüberliegenden Seite von der hinteren Vertikalwand 6 des Behälters begrenzt und in deren Nähe verläuft in deren Horizontalmitte das vertikale perforierte Sammelrohr 7 des filtrierten Wassers. An das Sammelrohr 7 ist der Ablauf 8 für das Reinwasser angeschlossen.

Im Abstand über dem oberen Ende der Sandsäule 3 mündet in den Behälter der Überlauf 9. Für die Regenerierung des verstopften Filters durch Einspritzen eines der Verschlammung des unteren Teils der Sandsäule dienenden Wasserstrahles ist ein Zuleitungsrohr 10 vorgesehen, welches sich vor dem Filterbehälter in zwei Rohrarme verzweigt, die über Absperrventile 11 und 11′ nahe dem Behälterboden und nahe den Vertikalrändern der Wand 1 des Filterbehälters in diesen senkrecht zu dieser einmünden. Zur Abfuhr des verschlammten Sandes und herausgewaschener Verunreinigungen ist das untere Ende des Eintrittsspaltes 2 über eine verhältnismäßig große Öffnung 13 ze dem unteren Teil der Sandsäule 3 hin offen, während zur Entsandung des Eintrittsspaltes nach dem Durchspülen der Sandsäule 3 in Höhe des Zuleitungsrohres 5 eine Leitplatte 12 im Abstand hinter dem Zuleitungsrohr angeordnet ist, welche zur Materialsäule 3 hin nach unten geneigt verläuft. Ferner ist zum Rückwaschen des Reinwasser-Sammelrohres 7 an dessen oberes Ende über ein Absperrventil ein mit dem Ablauf 8 verbundener Zulauf 14 angeschlossen, während das Sammelrohr 7 an seinem oberen Ende mit einer Verengung 15 versehen ist, durch welche die Strömungsgeschwindigkeit des über den Zulauf 14 zuströmenden Wassers gesteigert wird.

Im Turmfilter verläuft senkrecht zur Richtung der die Sandsäule 3 durchlaufenden Wasserströmung in oder nahe der vertikalen Mittelebene der Sandsäule 3 eine perforierte Unterteilungswand 16, mit deren Hilfe der Reinigungsvorgang auf die vordere Hälfte der Sandsäule beschränkt werden kann.

In den Fig. 1 und 2 ist der Strömungsweg des zu filtrierenden Wassers bzw. der Reinigungs-Wasserstrahlen eingezeichnet. Der Weg A bezeichnet den Weg des zu filtrierenden Wassers und der Weg B den Weg des filtrierten Wassers. Auf dem Weg C strömen die die vordere Hälfte der Filtersäule 3 rezirkulierenden Wasserstrahlen, während die die hintere Hälfte der Säule 3 rezirkulierenden Wasserstrahlen auf dem Weg D bzw. in deren Nähe strömen. Die Pfeile E zeigen den Weg des zum Rückwaschen des Sammelrohres dienenden, von oben nach unten injizierten Wasserstrahles.

Die Reinigung des in Fig. 1 und 2 dargestellten Turmfilters erfolgt in folgender Weise:

Sobald die Sandsäule 3 verstopft ist und einer Regenerierung bedarf, wird die Zufuhr des zu filtrierenden Wassers im Zuleitungsrohr 5 bzw. die Abfuhr des filtrierten Wassers im Ablauf 8 abgestellt, wonach mit der Regenerierung zweckmäßig so begonnen wird, daß in das Sammelrohr 7 über den Zulauf 14 von oben mit hoher Geschwindigkeit (5 bis 15 m/s) Reinwasser eingeleitet wird, das durch die Wirkung der Verengung 15 besonders beschleunigt wird. Die Injizierung des Reinwassers geschieht einige Sekunden hindurch, in welchen das Spülwasser in die sich in der Umgebung des Sammelrohres 7 befindlichen Teile der Sandsäule 3 mit hoher Geschwindigkeit hineinströmt, wodurch nicht nur die Filteroberfläche des Sammelrohres gereinigt wird, sondern auch die dünne Sandschicht zwischen dem Sammelrohr 7 und der hinteren Wand 6 des Behälters vollkommen ausgewaschen wird.

Wenn nun in der Sandsäule 3 nur die Reinigung der stärker verschmutzten vorderen Sandschicht erforderlich ist, wird die Sandsäule mittels der über das Einleitungsrohr 10 injizierten Wasserstrahlen unten derart unterwaschen, daß der Weg der Wasserstrahlen dem Weg C entspricht. Mit einer entsprechenden Einstellung der Geschwindigkeit der injizierten Wasserstrahlen wird erreicht, daß die Wasserstrahlen in der Sandsäule noch vor der Unterteilungswand 16 nach vorn zurückgelenkt werden, ein Teil unter der Unterkante der Leitplatte 12 hindurch in das untere Ende des Eintrittsspaltes 2 hineingeführt wird und der restliche Teil an der Innenseite der Leitplatte 12 innerhalb der vorderen Sandschicht nach oben umgelenkt wird und die vordere Sandschicht der Säule 3 von unten nach oben durchströmt, so daß die eingeführten Wasserstrahlen nur durch den Eintrittsspalt 2 und die vordere Hälfte der Sandsäule 3 hindurch zum oberen Ende der Sandsäule 3 zirkuliert und über demselben aus dem Überlaufrohr 9 abgeführt werden. Durch die unter der Unterkante der Verteilerplatte 12 hindurchgeführte Strömung werden Schmutzteilchen und Filterkörner durch den Eintrittsspalt 2 nach oben auf das obere Ende der Sandsäule 3 geführt, wo die mitgerissenen Sandkörner sich entsprechend dem Pfeil C1 absetzen können, während mittels des unteren Teil der Sandsäule 3 verschlammenden, infolge des Staudruckes in der Sandschicht nach vorn zurückströmenden Wasserstrahles die in der Sandsäule 3 nach unten absinkenden Sandkörner rückgewaschen werden.

Zeitweise, wenn sich auch die Regenerierung des hinter der perforierten Wand 16 befindlichen Teils der Sandsäule 3 als erforderlich erweist, geschieht dies derart, daß durch Absperren des einen Ventils 11′ und daher der einen Zuflußöffnung die Strömungsgeschwindigkeit des durch das geöffnete Ventil 11 der anderen Zuflußöffnung injizierten Wasserstrahles auf das zweifache gesteigert wird, wodurch die der Unterspülung und Verschlammung des unteren Teils der Sandsäule 3 dienenden Wasserstrahlen auf die Bahnen D1 und D2 gezwungen werden und somit die Rezirkulation bzw. das Rückwaschen der rechten Hälfte der hinteren Sandschicht erfolgt. Ein Teil des Wasserstrahles wird entsprechend dem Weg D1 in der hinteren Sandschicht umgelenkt und strömt unter der im Abstand über dem Behälterboden endenden Unterkante der Unterteilungswand 16 hindurch in die vordere Sandschicht und hauptsächlich in das untere Ende des Eintrittsspaltes 2, während der restliche Teil des Wasserstrahles entsprechend dem Pfeil D2 in der hinteren Sandschicht nach oben strömt.

Durch das Öffnen des Ventils 11' und das Schließen des Ventils 11 hingegen wird die Regenerierung der linken Hälfte der hinteren Sandschicht durchgeführt. Das Schmutzwasser fließt in beiden Fällen durch den Überlauf 9 ab und nimmt die von den Filterkörnern abgewaschenen Verunreinigungen mit sich.

Zum Abschluß des Reinigungsvorganges wird die in obiger Weise durchgeführte Rezirkulation der Sandsäule 3 durch Absperren der Ventile 11 und 11' abgestellt, während das sich in der Verbindungsleitung zwischen dem Einleitungsrohr 10 und dem Zuleitungsrohr 5 befindende Ventil geöffnet wird, so daß der durch das Einleitungsrohr 10 zuströmende Wasserstrahl in den unteren Raum des Eintrittsspaltes 2 im Bereich der Öffnung 13 in Form zweier seitlich gerichteter Zweigstrahlen (Fig. 2) welche durch die beiden seitlich ausgerichteten Mündungsöffnungen des Zuleitungsrohres 5 gebildet werden, hinein injiziert wird, so daß der dort vorhandene Sand aufgewaschen und durch den Eintrittsspalt 2 nach oben abgeführt wird.

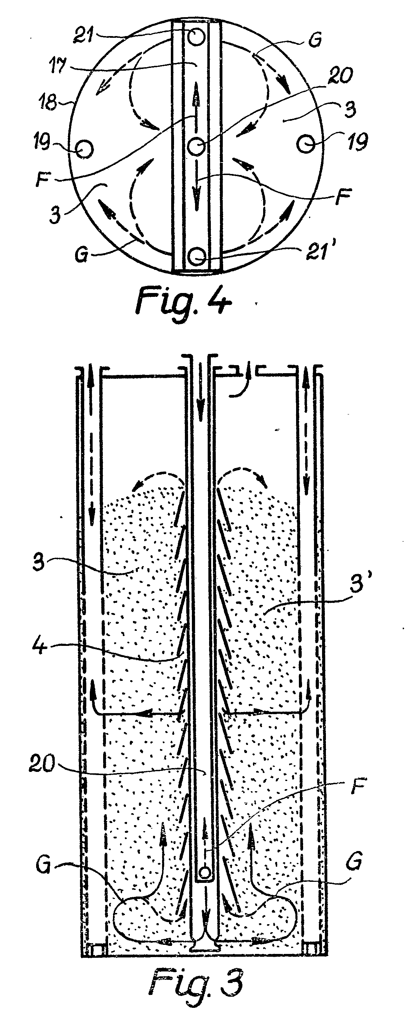

Der aus den Fig. 3 und 4 ersichtliche Turmfilter ist eine vorteilhafte Variante der Erfindung. Hier ist der Filterbehälter zylindrisch, während der Eintrittsspalt 17 entlang der Ebene eines Durchmessers des zylindrischen Behältermantels 18 verläuft. Bei dieser Lösung sind symmetrisch zu dem Eintrittsspalt 17 beidseitig desselben zwei Filtermaterialsäulen 3 und 3' ausgebildet, in denen nahe der Behälterwand jeweils ein perforiertes Sammelrohr 19 in Höhe der Quermitte des Eintrittsspales 17 verläuft. Entsprechend ist der Eintrittsspalt 17 beidseitig von einer jalousieartigen, aus den Plattenstreifen 4 und unten der Leitplatte gebildeten Wand begrenzt. Vertikal in der Quermitte des Eintrittsspaltes 17 verläuft das Zuleitungsrohr 20 für das zu behandelnde Rohwasser. Das Zuleitungsrohr 20 mündet in Höhe der Leitplatten des Eintrittsspaltes 17 im Abstand über dem Behälterboden in zwei in Querrichtung des Eintrittsspaltes 17 ausgerichteten Mündungsöffnungen, so daß das Rohwasser entsprechend den Pfeilen F in Fig. 4 in das untere Ende des Eintrittsspaltes 17 und in diesem entsprechend dem Pfeil F in Fig. 3 nach oben strömt. An den beiden seitlichen Enden des Eintrittsspaltes 17 sind zwei vertikale Einleitungsrohre 21 und 21' (Fig. 4) angeordnet, die dicht über dem Behälterboden (Fig. 3) jeweils in zwei entgegengesetzt zueinander senkrecht zur Ebene des Eintrittsspaltes 17 ausgerichteten Öffnungen münden, so daß das durch die Einleitungsrohre 21, 21' zugeführte Reinigungswasser entsprechend den Pfeilen G in den Fig. 3 und 4 in die beiden Sandsäulen 3, 3' hinein injiziert wird. Wie aus den Fig. 3 und 4 ersichtlich, werden die Sandsäulen 3 mittels eines Teilstrahles unterspült und verschlammt, der zum unteren Ende des Eintrittsspaltes hin zurückgelenkt wird und die herausgewaschenen Verunreinigungen und mitgerissenen Sandkörner durch den Eintrittsspalt nach oben strömend abführt, während ein anderer Teilstrahl innerhalb der Sandsäulen 3, 3' nach oben umgelenkt wird und diese von unten nach oben durchspült.

Der aus den Fig. 3 und 4 ersichtliche Turmfilter arbeitet wie folgt:

Für die Filtrierung wird das Rohwasser durch das Zuleitungsrohr 20 eingeführt und verteilt sich in Richtung der Pfeile F horizontal und vertikal in dem Eintrittsspalt 17, wird durch die Spalte zwischen den Plattenstreifen 4 der beiden den Eintrittsspalt 17 zu den Sandsäulen 3, 3' hin begrenzenden Wände in die Sandsäulen verteilt und dort filtriert und tritt über die perforierten Sammelrohre 19 wieder aus dem Turmfilter aus. Bei einer Verstopfung der Sandsäulen 3 und 3' wird der Filtriervorgang abgestellt, d.i. die Zufuhr der Rohflüssigkeit durch des Rohr 20 und die Abfuhr des filtrierten Wassers durch die Sammelrohre 19 werden abgeschaltet, wonach zur Regenerierung über die Rohre 21, 21' das Regenerierwasser in die Filtersäulen 3, 3' injiziert wird. Die Zirkulation und das Rückwaschen der Filterkörner der Sandsäulen 3 und 3' mittels der entlang der Bahnen G strömenden Flüssigkeit erfolgt entsprechend wie zu der Ausführungsform aus den Fig. 1 und 2 oben beschrieben. Auch die Entsandung des Eintrittsspaltes 17 bzw. das Rückwaschen der Sammelrohre 19 erfolgt wie bei der Ausführungsform aus den Fig. 1 und 2.

Ein großer Vorteil der in den Fig. 3 und 4 dargestellten Einrichtung besteht darin, daß diese auch in geschlossener, unter Druck stehender Ausführungsform arbeiten kann, wobei die Einrichtung auch unterirdisch und auf diese Weise auch außerhalb des Gebäudes untergebracht werden kann oder in der Höhe des zur Anordnung des Turmfilters dienenden Gebäudes eine wesentliche Ersparnis zu erreichen ist.

Das Verfahren und die Vorrichtung gemäß der Erfindung können nicht nur in der beispielhaft beschriebenen Ausführungsform verwirklicht werden. Der Filterbehälter kann z.B. auch vieleckig sein und kann gleichermaßen aus Stahl, Aluminium, Beton oder Kunststoff hergestellt sein. Es können mehrere in einem Block gebaute Filtereinheiten in Reihenschaltung oder Parallelschaltung betrieben werden, je nachdem, wie es den qualitativen und quantitativen Erfordernissen entspricht.

Für die Regenerierung des Filters kann auch mit der Rezirkulation begonnen werden, während das Sammelrohr für das Reinwasser erst daran anschließend rückgespült wird. Es kann sich sogar als ausreichend erweisen, die Rückspülung des Sammelrohres nur in verhältnismäßig großen Zeitabständen, z.B. nur wöchentlich durchzuführen. Gegebenenfalls kann der Filter auch so regeneriert werden, daß — ohne Rezirkulation der Sandsäule — zwei- bis dreimal hintereinander nur die Rückspülung des Sammelrohres und die Entsandung des Eintrittsspaltes durchgeführt werden. Im Falle von mehreren Sammelrohren kann die Rückspülung z.B. auch parrweise oder jeweils gesondert durchgeführt werden. Durch entsprechende Auswahl der Intensität und Geschwindigkeit der injizierten Wasserstrahlen und durch ihre an entsprechender Stelle erfolgende Dosierung kann die Wirksamkeit der Reinigung der Sandsäule in beliebigem Maße verstärkt werden.

Bei Anwendung des Verfahrens und der Vorrichtung gemäß der Erfindung ergeben sich folgende Einzelvorteile:

Das Reinwassersammelrohr des Filters kann innerhalb einiger Sekunden rückgewaschen werden, wodurch das größte Problem der gegenwärtigen Turmfilter, die Verstopfung der Sammelrohre, endgültig behoben werden kann. Die Regenerierung der Filtersäule beansprucht infolge der Hochleistungs-Reversiv-Schlammrezirkulation und der raschen Entsandung des Eintrittsspaltes nur sehr wenig Zeit, die lediglich den zehnten bis zwanzigsten Teil der für die bekannten Turmfilter erforderlichen Reinigungszeit ausmacht. Ferner wird die Regenerierungszeit abgekürzt, wenn die Filtersäule in zwei vertikale Schichten unterteilt ist, die auch jeweils gesondert gereinigt werden können. Da sowohl die üblichen, übermäßig starken Pumpen wie auch die Kompressoren oder Wasserstrahlpumpen entbehrlich sind, fallen auch zu Verstopfungen führende enge Querschnitte weg. Ferner sind im Filter keine störenden, mit Sand oder Wasser gefüllten Toträume vorhanden. Infolge des einfachen Behälters mit flachem Boden wird auch der Platz und das Filtermaterial im vollen Maße ausgenutzt. Die einfachen Jalousieplatten, die eben sind und ohne Überlappung aneinandergefügt sind, können ohne besondere Werkzeuge einfach hergestellt werden. Die Ausführung des Filterbehälters mit flachem Boden ermöglicht statisch den wirtschaftlichen Aufbau einer beliebig großen Einheit nebst Einsparung spezifischen Materialaufwandes. Die Einrichtung eines aufwendigen und kostspieligen Rohrkellers ist unnötig, da der Filter oberirdisch auf dem Boden oder unterirdisch gebaut werden kann. Die Bedienung ist einfach und kann leicht automatisiert werden, da diese nur aus dem Öffnen und Schließen von Ventilen und Hähnen besteht. Ferner kann der erfindungsgemäße Filter je nach den qualitativen Anforderungen als Kontaktfilter, mit chemischer Vorbehandlung, mit Vorklärung oder ohne diese betrieben und auch zur Abwasserreinigung verwendet werden.

Durch die Erfindung werden sämtliche Mängel der gegenwärtigen Turmfilter behoben und dabei das nutzbare Volumen erhöht, wodurch durch Blockbauweise der Platzbedarf auf ein Viertel und die Erzeugungskosten bzw. der Investitionsaufwand ungefähr auf die Hälfte herabgesetzt werden können.

**Patentansprüche**

1. Verfahren zum Regenerieren einer der Behandlung von Flüssigkeiten durch Filtrieren und/oder durch Ionenaustausch in einer Materialsäule aus körnigem Behandlungsmaterial dienenden Vorrichtung, in welcher die Flüssigkeit in horizontaler Strömung durch die Materialsäule geleitet wird und aus einem vertikalen, im wesentlichen die gesamte horizontale Breite der Materialsäule einnehmenden Eintrittsspalt an deren einen Seite in die Materialsäule verteilt und an deren anderen Seite aus ihr herausgeleitet wird, dadurch gekennzeichnet, daß durch ein dem Herausleiten der Flüssigkeit aus der Materialsäule dienendes vertikales perforiertes Sammelrohr wesentlich geringeren Querschnitts als der Eintrittsspalt nach dem Abschalten des Behandlungsvorganges eine Regenerierflüssigkeit von oben nach unten mit hoher Geschwindigkeit eingeleitet wird und über der Materialsäule aus einem Überlauf abgeleitet wird.

2. Verfahren zum Regenerieren einer der Behandlung von Flüssigkeiten durch Filtrieren und/oder durch Ionenaustausch in einer Materialsäule aus körnigem Behandlungsmaterial dienenden Vorrichtung, in welcher die Flüssigkeit in horizontaler Strömung durch die Materialsäule geleitet wird und aus einem vertikalen, im wesentlichen die gesamte Breite der Materialsäule einnehmenden Eintrittsspalt an deren einen Seite in die Materialsäule verteilt und an deren anderen Seite aus ihr herausgeleitet wird, vorzugsweise nach Anspruch 1, dadurch gekennzeichnet, daß nach dem Abschalten des Behandlungsvorganges der Unterteil der Materialsäule durch örtliches Einspritzen einer Regenerierflüssigkeit von der Seite her unterspült und die Einspritzströmung im Inneren der Materialsäule zu dem unten offenen Eintrittsspalt hin umgelenkt und wenigstens teilweise in diesen eingeleitet wird, wobei der Schlamm wenigstens zum Teil durch den Eintrittsspalt nach oben in den Raum über der Materialsäule zirkuliert und daraus die Verunreinigungen mit der Schlammflüssigkeit durch einen Überlauf abgeführt werden.

3. Verfahren nach Anspruch 1 oder 2, dadurch gekennzeichnet, daß Regenerierflüssigkeit oder Behandlungsflüssigkeit in den unteren Teil des Eintrittsspaltes seitlich eingeleitet und an einer Leitplatte angestaut und verwirbelt wird, derart, daß im unteren Teil des Eintrittsspaltes vorhandene Materialkörner im Eintrittsspalt nach oben abgeführt und auf das obere Ende der Materialsäule gebracht werden.

4. Vorrichtung zum Behandeln von Flüssigkeiten durch Filtrieren und/oder Ionenaustausch, zur Durchführung des Regenerierverfahrens nach den Ansprüchen 1 bis 3, mit einem Behälter, der mindestens eine Materialsäule (3) aus körnigem Behandlungsmaterial enthält, an deren einen Seite ein sich im wesentlichen über die gesamte Breite der Materialsäule (3) vertikal erstreckender Eintrittsspalt (2, 17) zu der Materialsäule hin von einer jalousieartig ausgebildeten Wand aus unter Ausbildung von Durchtrittsspalten im Abstand voneinander verlaufenden Plattenstreifen (4) begrenzt ist, dadurch gekennzeichnet, daß an der dem Eintrittsspalt (2, 17) abgewendeten Seite der Materialsäule (3) ein sich im wesentlichen über deren Höhe hin erstreckendes perforiertes Sammelrohr (7, 19) wesentlich geringeren Durchströmquerschnitts als der Eintrittsspalt (2, 17) angeordnet ist, daß der Eintrittsspalt (2, 17) am unteren Ende über eine verhältnismäßig große Öffnung (13) mit dem unteren Teil der Materialsäule (3) verbunden ist und dicht über der Öffnung ein Zuleitungsrohr (5, 20) der zu behandelnden Flüssigkeit einmündet und die Wand in Höhe des Zuleitungsrohres (5, 20) eine Leitplatte (12) aufweist, daß unterhalb der Leitplatte (12) auf derselben Seite wie das Zuleitungsrohr (5, 20) in den unteren Teil der Materialsäule gerichtete Zuflußöffnungen (10, 21) für eine Regenerierflüssigkeit münden und über der Materialsäule ein Überlauf (9) ausgebildet ist, und daß an das obere Ende des Sammelrohres (7, 19) ein Ablauf (8) für die behandelte Flüssigkeit und ein Zulauf (14) für eine Regenerierflüssigkeit angeschlossen sind.

5. Vorrichtung nach Anspruch 4, dadurch gekennzeichnet, daß am oberen Ende des Sammelrohres (7) eine die Strömungsgeschwindigkeit der durch den Zulauf (14) zugeführten Regenerierflüssigkeit erhöhende Verengung (15) ausgebildet ist.

6. Vorrichtung nach Anspruch 4 oder 5, dadurch gekennzeichnet, daß die Materialsäule (3) im Abstand zwischen dem Eintrittsspalt (2) und dem Sammelrohr (7) von einer groblöcherig perforierten vertikalen Unterteilungswand (16) in zwei Teile unterteilt ist.

7. Vorrichtung nach einem der Ansprüche 4 bis 6, dadurch gekennzeichnet, daß der die Materialsäule (3) enthaltende Behälter einen flachen Boden hat.

8. Vorrichtung nach einem der Ansprüche 4 bis 7, dadurch gekennzeichnet, daß der Eintrittsspalt (17) an beiden Breitseiten von je einer Materialsäule (3, 3') begrenzt ist und in jeder der beiden symmetrisch zum Eintrittsspalt (17) angeordneten Materialsäulen (3, 3') ein perforiertes Sammelrohr (19) im Abstand von dem Eintrittsspalt (17) angeordnet ist.

**Claims**

1. A process for the regeneration of an apparatus serving for the treatment of liquids by filtration and/or ion-exchange in a column of a particulate treatment material, wherein the liquid is directed in horizontal flow through the column of material and is distributed over one side of the column of material from a vertical inlet aperture taking up substantially the total horizontal width of the material column and is discharged from the latter at its other side, characterised in that, after stopping the treatment process, a regenerating liquid is introduced through a vertical perforated collector pipe from the top downwardly at a high flow velocity, the collector pipe having a cross-section which is substantially smaller than that of the inlet aperture and serving for discharging the treated liquid from the column of material, and is drained from above the column via an overflow.

2. A process for the regeneration of an apparatus serving for the treatment of liquids by filtration and/or ion-exchange in a column of particulate treatment material, wherein the liquid is directed in horizontal flow through the column of material and is distributed over the latter at one side thereof from a vertical inlet aperture which takes up substantially the total horizontal width of the column of material and is passed out at the other side thereof, preferably according to Claim 1, characterised in that, after stopping the treatment process, the lower part of the column of material is under-washed by means of a locally applied lateral injection a regenerating liquid and the injected flow within the column of material is deflected towards the downwardly open inlet aperture and is at least partially guided into the latter, whereby sludge is at least partially circulated via the inlet aperture upwardly into the space above the column of material wherefrom the impurities together with the liquid of the sludge are discharged over an overflow.

3. A process according to Claim 1 or 2, characterised in that the regenerating liquid or treatment liquid is introduced laterally into the lower part of the inlet aperture and is caused to impinge upon and rendered turbulent by a guide plate in such a way that the particles or grains of material present in the lower part of the inlet aperture are directed upwardly and are brought to the upper end of the column of material.

4. Apparatus for the treatment of liquids by filtration and/or ion-exchange, for carrying out the regeneration process according to Claims 1 to 3, comprising a vessel containing at least one column (3) of particulate treatment material on one side of which a vertically extending inlet aperture (2, 17) occupying substantially the total width of the column (3) of material bounds the latter in the form of a louvred wall consisting of spaced-apart plate strips (4) forming through-passages, characterised in that on the side of the column (3) of material remote from the inlet aperture (2, 17) there is arranged a perforated collector pipe (7, 19) of substantially smaller flow cross-section than that of the inlet aperture (2, 17) and extending over substantially the total height of the column (3) of material; that at its lower end the inlet aperture (2, 17) is connected via a relatively large aperture (13) with the lower part of the column (3) of material, and closely over said aperture a supply pipe (5, 20) for the liquid to be treated is opening, and at the level of the entry point of the supply pipe (5, 20) the wall has a guide

## 0 003 607

plate (12); that below the guide plate (12) and on the same side as the supply pipe (5, 20) there are inflow openings (10, 21) for a regenerating fluid directed towards the lower part of the column (3) of material, and an overflow (9) is provided over the column (3) of material; and that an outlet (8) for the treated liquid and an inlet (14) for a regenerating liquid are connected to the upper end of the collector pipe (7, 19).

5. Apparatus according to Claim 4, characterised in that a constriction (15) is formed at the upper end of the collector pipe (7) for increasing the flow velocity of the regenerating liquid flowing through the inlet (14).

6. Apparatus according to Claim 4 or 5 characterised in that the column (3) of material is subdivided at a location spaced from the inlet aperture (2) and the collector pipe (7) into two parts by a vertical, coarsely perforated partition wall (16).

7. Apparatus according to any one of Claims 4 to 6, characterised in that the vessel containing the column (3) of material is flat-bottomed.

8. Apparatus according to any one of Claims 4 to 7, characterised in that the inlet aperture (17) is laterally bounded on its two wider sides by respective columns (3, 3') of material and in each of the two material columns, which are symmetrical in relation to the inlet aperture (17), a respective perforated collector pipe (19) is arranged at a distance from the inlet aperture (17).

### Revendications

1. Procédé de régénération d'un dispositif servant au traitement de liquides par filtrage et/ou échange d'ions dans une colonne de matière de traitement granuleuse, dans lequel le liquide est guidé suivant un écoulement horizontal à travers la colonne de matière et est distribué dans la colonne de matière, d'un côté de celle-ci, à partir d'un intervalle d'entrée vertical, occupant sensiblement la totalité de la largeur horizontale de la colonne de matière et est évacué de cette colonne, de l'autre côté de cette dernière, caractérisé en ce qu'un liquide de régénération est, après l'interruption du processus de traitement, introduit à grande vitesse du haut ver le bas à travers un conduit collecteur perforé vertical qui sert à la sortie du liquide hors de la colonne de matière et qui présente une section transversale sensiblement plus petite que l'intervalle d'entrée, et en ce qu'il est évacué au-dessus de la colonne de matière par un trop-plein.

2. Procédé de régénération d'un dispositif servant au traitement de liquides par filtrage et/ou échange d'ions dans une colonne de matière de traitement granuleuse, dans lequel le liquide est guidé suivant un écoulement horizontal à travers la colonne de matière et est distribué dans la colonne de matière, d'un côté de celle-ci, à partir d'un intervalle d'entrée vertical occupant sensiblement la totalité de la largeur de la colonne de matière et est évacué hors de cette colonne, de l'autre côté de celle-ci, de préférence suivant la revendication 1, caractérisé en ce que, après l'interruption du processus de traitement, la partie inférieure de la colonne de matière est affouillée par injection locale d'un liquide de régénération à partir d'un côté, en ce que le flux injecté à l'intérieur de la colonne de matière est renvoyé vers l'intervalle d'entrée ouvert vers le bas et est introduit au moins partiellement dans ce dernier, la boue étant mise à circuler au moins partiellement à travers l'intervalle d'entrée vers le haut dans l'espace situé au-dessus de la colonne de matière et les impuretés étant évacuées avec le liquide de la boue par un trop-plein.

3. Procédé suivant l'une ou l'autre des revendications 1 et 2, caractérisé en ce que le liquide de régénération ou le liquide de traitement est introduit latéralement dans la partie inférieure de l'intervalle d'entrée et est refoulé et mis à tourbillonner sur une plaque déflectrice de telle sorte que les granules de matière présents dans la partie inférieure de l'intervalle d'entrée sont évacués vers le haut dans l'intervalle d'entrée et amenés à l'extrémité supérieure de la colonne de matière.

4. Dispositif de traitement de liquides par filtrage et/ou échange d'ions, pour la mise en oeuvre du procédé de régénération suivant l'une quelconque des revendications 1 à 3, comprenant un récipient qui contient au moins une colonne de matière (3) à base de matière de traitement granuleuse, d'un côté de laquelle est délimité, par rapport à la colonne de matière, un intervalle d'entrée (2, 17) qui s'étend verticalement sensiblement sur la totalité de la largeur de la colonne de matière (3), par un paroi réalisée en forme de jalousie et constituée de lames (4) qui sont disposées à une certaine distance l'une de l'autre tout en réalisant des fentes de passage, caractérisé en ce qu'un conduit collecteur (7, 19) perforé qui s'étend sensiblement sur la hauteur de la colonne et présente une section de passage beaucoup plus petite que l'intervalle d'entrée (2, 17) est agencé du côté de la colonne de matière (3) opposé à l'intervalle d'entrée (2, 17), en ce que l'intervalle d'entrée (2, 17) est en communication avec la partie inférieure de la colonne de matière (3) à son extrémité inférieure, par l'intermédiaire d'une ouverture relativement grande (13), un conduit d'amenée (5, 20) du liquide à traiter débouchant juste au-dessus de l'ouverture, la paroi présentant à hauteur du conduit d'amenée (5, 20) une plaque déflectrice (12), en cen que des orifices d'amenée (10, 21) pour un liquide de régénération, qui sont orientés dans la partie inférieure de la colonne de matière débouchent en dessous de la plaque (12) du même côté que le conduit d'amenée (5, 20), un trop-plein (9) étant réalisé au-dessus de la colonne de matière, et en ce qu'une sortie (8) pour le liquide traité et une entrée (14) pour un liquide de régénération sont raccordées à l'extrémité supérieure du conduit collecteur (7, 19).

9

5. Dispositif suivant la revendication 4, caractérisé en ce qu'un étranglement (15) augmentant la vitesse d'écoulement du liquide de régénération amené à travers l'entrée (14) est réalisé à l'extrémité supérieure du conduit collecteur (7).

6. Dispositif suivant l'une ou l'autre des revendications 4 et 5, caractérisé en ce que la colonne de matière (3) est subdivisée en deux parties, à une certaine distance entre l'intervalle d'entrée (2) et le conduit collecteur (7), par une paroi de subdivision (16) verticale perforée à gros trous.

7. Dispositif suivant l'une des revendications 4 à 6, caractérisé en ce que le récipient contenant la colonne de matière (3) présente un fond plat.

8. Dispositif suivant l'une des revendications 4 à 7, caractérisé en ce que l'intervalle d'entrée (17) est délimité des deux côtés en largeur par un colonne de matière (3, 3') et en ce que dans chacune des deux colonnes de matière (3, 3') agencées de manière symétrique par rapport à l'intervalle d'entrée (17) est agencé un conduit collecteur perforé (19) à une certaine distance de l'intervalle d'entrée (17).

*Fig. 2*

*Fig. 1*

Fig. 4

Fig. 3